Europäisches Patentamt

European Patent Office

Office européen des brevets

(19)

(11) Veröffentlichungsnummer: **0 182 234**
**B1**

(12) **EUROPÄISCHE PATENTSCHRIFT**

(45) Veröffentlichungstag der Patentschrift: **22.08.90**

(51) Int. Cl.⁵: **B 01 D 19/04**

(21) Anmeldenummer: **85114288.5**

(22) Anmeldetag: **09.11.85**

(54) Verwendung von Polymerisaten von Alkylvinylethern zur Verhinderung oder Beseitigung von Schaum auf wässrigen Medien.

(30) Priorität: **23.11.84 DE 3442727**

(43) Veröffentlichungstag der Anmeldung:
**28.05.86 Patentblatt 86/22**

(45) Bekanntmachung des Hinweises auf die
Patenterteilung:
**22.08.90 Patentblatt 90/34**

(84) Benannte Vertragsstaaten:
**CH FR GB IT LI NL**

(56) Entgegenhaltungen:
**DE-A-2 302 876**
**GB-A-1 167 136**
**US-A-3 127 352**
**US-A-3 954 886**
**US-A-4 230 599**

(73) Patentinhaber: **Th. Goldschmidt AG**
**Goldschmidtstrasse 100 Postfach 101461**
**D-4300 Essen 1 (DE)**

(72) Erfinder: **Fock, Jürgen, Dr.**
**Mörsenbroicher Weg 114**
**D-4000 Düsseldorf (DE)**
Erfinder: **Fink, Hans-Ferdi**
**Brassertstrasse 46**
**D-4300 Essen (DE)**
Erfinder: **Esselborn, Eberhard**
**Pilotystrasse 21**
**D-4300 Essen (DE)**
Erfinder: **Heilen, Wernfried**
**Sallhofferstrasse 85**
**D-4134 Rheinberg (DE)**

Courier Press, Leamington Spa, England.

## EP 0 182 234 B1

**Beschreibung**

Es ist bekannt, zum Entschäumen wäßriger Medien pflanzliche oder mineralische Öle zu verwenden. Wirksamer als diese Öle haben sich Siliconöle erwiesen, die bereits in kleiner Menge die Bildung von Schaum auf wäßrigen Medien unterdrücken oder bereits gebildeten Schaum beseitigen können. Bei der Verwendung von Siliconölen können jedoch Schwierigkeiten bei der weiteren Verarbeitung oder Anwendung der entschäumten wäßrigen Medien auftreten, die durch die hohe Spreitungsfähigkeit der im System verbliebenen Siliconöle und ihre hydrophobierende Wirkung verursacht werden.

Es ist ferner bekannt, daß Polyoxyalkylenmono- oder -diole oder deren Ether in wäßrigen Systemen schaumverhindernde oder schaumbeseitigende Eigenschaften aufweisen, wenn sie in diesen Systemen unlöslich sind. Dabei hat man in der Regel die Mono- oder Diole von Polyadditionsprodukten aus Ethylenoxid und Propylenoxid verwendet. Polyadditionsprodukte, die ausschließlich Oxyethyleneinheiten enthalten, entfalten ihre entschäumende Wirkung bei oder nach Überschreiten ihres Trübungspunktes in wäßriger Lösung.

Um Produkte mit verbesserten entschäumenden Eigenschaften zu erhalten, hat man auch bereits Mischpolymerisate hergestellt, welche aus Polyoxyalkylen- und Polysiloxanblöcken bestehen. Besonders bevorzugt sind dabei solche Blockmischpolymerisate, deren Polyoxyalkylenblock mindestens 80 Gew.-% Oxypropyleneinheiten aufweist. Eine solche Zubereitung ist z.B. in der DE—B—24 43 853 beschrieben. Bei dieser Zubereitung kann die entschäumende Wirksamkeit noch durch Zusatz hochdisperser Kieselsäure, die z.B. durch Flammhydrolyse hergestellt ist, erhöht werden.

In der DE—C—23 45 335 ist ein Entschäumer für wäßrige Lösungen oder Dispersionen beschrieben, welcher 80 bis 95 Gew.-% eines Mineralöles oder pflanzlichen oder tierischen Öles, 1 bis 7,5 Gew.-% hochdisperse Kieselsäure oder hochdisperses Aluminiumoxid, 1,0 bis 10 Gew.-% eines Methylpolysiloxan-Polyoxyalkylen-Blockmischpolymerisates, dessen Methylpolysiloxanblock 10 bis 60 Gew.-% des Polymerisates ausmacht und dessen Polyoxyalkylenblock 80 bis 100 Gew.-% Oxypropyleneinheiten aufweist, enthält.

Die meisten dieser aus dem Stand der Technik bekannten schaumverhindernden oder schaumbeseitigenden Verbindungen sind nicht gegen den Angriff saurer oder alkalischer Medien beständig, sondern werden im Laufe der Zeit, insbesondere bei erhöhter Temperatur, zersetzt und verlieren dann ihre Wirksamkeit.

Es ist deshalb erwünscht, schaumverhindernde oder schaumbeseitigende Verbindungen zu finden, die alkali- und/oder säurestabil sind. Die Verbindungen sollten frei von siliciumorganischen Gruppen sein, um Schwierigkeiten bei der weiteren Verwendung der entschäumten Medien zu vermeiden. Die Verbindungen sollen leicht zugänglich und in einfacher Weise herstellbar sein und ihre Antischaumwirkung bereits in niedrigen Konzentrationsbereichen von wenigen ppm aufweisen.

Diese der Erfindung zugrunde liegenden Aufgaben können überraschenderweise durch die Verwendung von Polymerisaten von Alkylvinylethern mit definiertem Molekulargewicht als Antischaumwirkstoff gelöst werden.

Gegenstand der Erfindung ist somit die Verwendung von Polymerisaten von Alkylvinylethern, deren Alkylrest 2 bis 18 Kohlenstoffatome aufweist, mit einem Gewichtsmittel des Molekulargewichtes $\overline{M}_w$ von 400 bis 10 000 in Mengen von 1 bis 200 ppm zur Verhinderung oder Beseitigung von Schaum auf wäßrigen Medien.

Das Gewichtsmittel des Molekulargewichtes ist dabei als

$$\overline{M}_w = \frac{\Sigma n_i \cdot M_i^2}{\Sigma n_i \cdot M_i}$$

definiert, wobei $n_i$ die Molzahl mit dem Molekulargewicht $M_i$ ist (Houben-Weyl "Methoden der organischen Chemie", Georg Thieme-Verlag, Stuttgart, Band XIV/1, S. 19). Dabei kann das Molekulargewicht $M_i$ z.B. gelchromatographisch oder viskosimetrisch bestimmt werden.

Beispiele von Alkylvinylethern, die für die Herstellung der erfindungsgemäß zu verwendenden Polymerisate geeignet sind, sind Ethyl-, Butyl-, Isobutyl-, Ethylhexyl-, Octyl-, Decyl-, Hexadecyl- und Octadecylvinylether.

Die Polymerisate der Alkylvinylether können in an sich bekannter Weise, z.b. mittels kationischer Initiatoren, wie Lewis-Säuren, z.B. $BF_3$, $AlCl_3$, $SnCl_4$ oder deren Komplexe mit Ethern, sowie Metallsulfate, wie $Al_2(SO_4)_3 \cdot 7H_2O$ hergestellt werden. Derartige Polymerisationsverfahren sind in "Methoden der organischen Chemie" von Houben-Weyl, Georg Thieme-Verlag, Stuttgart, Band XIV/1, S. 927 ff. beschrieben.

Die erfindungsgemäß zu verwendenden Polymerisate können Homo- oder Mischpolymerisate von Alkylvinylethern mit unterschiedlichen Alkylresten sein.

Besonders bevorzugt ist die Verwendung von Polymerisaten von Alkylvinylethern, deren Alkylrest 4 bis 10 Kohlenstoffatome, insbesondere 4 Kohlenstoffatome, aufweist. Dabei zeigen im allgemeinen Polymerisate von Alkylvinylethern, deren Alkylrest verzweigt ist, höhere Wirksamkeit als Polymerisate von Alkylvinylethern mit geradkettigen Alkylresten. Besonders bevorzugt sind deshalb Polymerisate von Alkylvinylethern, welche als Alkylrest den Isobutylrest aufweisen.

Verwendet man Polymerisate von Alkylvinylethern, deren Alkylrest eine Kohlenstoffanzahl von mehr als 6 Kohlenstoffatomen aufweist, ist der untere Bereich des Molekulargewichts auf jeden Fall so zu wählen, daß zumindest oligomere Alkylvinylether mit mindestens 3 Vinyleinheiten vorliegen.

Aus der US—A—3 127 352 ist es bereits bekannt, daß bestimmte, hochmolekulare Polymerisate von Polyvinylethern eine entschäumende Wirkung haben. Jedoch werden dort die Polyvinylether zur Entschäumung flüssiger Kohlenwasserstoffe verwendet, und es wird dem Fachmann die Lehre vermittelt, daß das Molekulargewicht der Polymerisate mindestens 150 000 betragen muß. Die Polymerisate verlieren ihre entschäumende Wirksamkeit für flüssige Kohlenwasserstoffe mit fallendem Molekulargewicht und sind unterhalb eines Molekulargewichts von 50 000 wirkungslos. Der US—A—3 127 352 konnte deshalb die erfindungsgemäße Lehre, nämlich relativ niedrigmolekulare Polymerisate von Alkylvinylethern zur Entschäumung wäßriger Medien zu verwenden, nicht entnommen werden.

Die erfindungsgemäß zu verwendenden Polymerisate werden dem zu entschäumenden wäßrigen Medium entweder in reiner Form, vorzugsweise jedoch in Form einer Emulsion zugegeben. Dabei werden die Polymerisate insbesondere in Mischungen von Wasser und Alkoholen, wie z.B. Isopropylalkohol, emulgiert. Durch die Verwendung derartiger Emulsionen ist die Verteilung und Dosierung der erfindungsgemäß zu verwendenden Mittel erleichtert. Zweckmäßig enthalten die Emulsionen 5 bis 50 Gew.-% Wirkstoff.

Die Stabilität der Wirkstoffemulsion kann durch Zugabe an sich bekannter Emulgatoren, insbesondere nichtionogener Emulgatoren, erhöht werden. Beispiele geeigneter Emulgatoren sind die Anlagerungsprodukte von Ethylenoxid an Tridecylalkohol oder Nonylphenol.

Dem Wirkstoff oder der den Wirkstoff enthaltenden Emulsion kann man feinteilige Kieselsäure zusetzen. Man verwendet hierzu insbesondere durch Flammpyrolyse erhaltene Kieselsäure, die gegebenenfalls in an sich bekannter Weise ganz oder teilweise auf ihrer Oberfläche hydrophobiert ist. Besonders bevorzugt verwendet man die Kieselsäure in bis zu gleichen Gewichtsmengen, bezogen auf Wirkstoff. Jedoch werden bereits durch geringe Zusätze, z.B. 5 Gew.-% bezogen auf Wirkstoff, hervorragende Resultate erzielt.

Die erfindungsgemäß zu verwendenden Polymerisate werden den entschäumenden Medien in Mengen von 1 bis 200 ppm zugesetzt. Dabei genügt in der Regel ein Zusatz von 1 bis 100, meist 20 bis 50 ppm Wirkstoff zum wäßrigen Medium, um die Bildung von Schaum zuverlässig zu verhindern bzw. bereits vorhandenen Schaum zu zerstören. Die erfindungsgemäß zu verwendenden Polymerisate sind gegen Einwirkung von Säuren und Laugen stabil und können beispielsweise mit besonderem Erfolg in Beiz- und Galvanisierbädern sowie in stark alkalischen Lösungen eingesetzt werden.

In den folgenden Beispielen wird die im Rahmen vorliegender Erfindung nicht beanspruchte Herstellung der erfindungsgemäß zu verwendenden Polymerisate gezeigt und ihre schaumverhindernde und schaumbeseitigende Wirkung nachgewiesen.

## Beispiel 1

A) Herstellung von Polyisobutylvinylether (nicht erfindungsgemäß)

In eine Lösung von 0,45 g eines Komplexes aus Bortifluorid und Diethylether in 200 g über Natriummetall getrocknetem Toluol werden unter Rühren und unter einem Strom mit konzentrierter Schwefelsäure getrockneten Stickstoffs 400 g (= ca. 4 Mol) über ein Molekularsieb getrockneter i-Butylvinylether über einen Zeitraum von 1 h bei einer Temperatur von 60°C zugetropft. Nach dem Zutropfen wird noch für eine weitere Stunde bei 60°C erwärmt. Nach Reaktionsende werden zu der erhaltenen Lösung 100 g bidestilliertes Wasser und 0,6 g einer 25% igen wäßrigen Ammoniaklösung gegeben und sorgfältig durchmischt. Schließlich wird die wäßrige Phase abgetrennt, noch zweimal mit Wasser gewaschen und Toluol und Restwasser bei 80°C im Wasserstrahlpumpenvakuum abdestilliert.

Das erhaltene Produkt ist eine klare, leicht gelbliche Flüssigkeit mit einer Viskosität von 750 mPas. Aus der gelchromatographischen Untersuchung ergibt sich für das Gewichtsmittel des Molekulargewichts $\overline{M}_w$ = 1080 und für das numerische Mittel des Molekulargewichts $\overline{M}_n$ = 870. $\overline{M}_n$ ist das Zahlenmittel des Molekulargewichtes und definiert als das durch die Anzahl der Mole dividierte Gewicht einer Probe des Polymeren (Houben-Weyl, loc. cit., S. 19).

B) Anwendungstechnische Prüfung

9,5 g des gemäß A) erhaltenen Produktes werden in 10 g Toluol gelöst und dazu 0,5 g einer hydrophobierten hochdispersen Fällungskieselsäure sowie 10 g Isopropanol gegeben. In die erhaltene Dispersion werden mit Hilfe einer Mizer-Scheibe innerhalb von 2 Minuten bei einer Umdrehungszahl von 1750 Upm 10 g deionisiertes Wasser eindispergiert.

50 ppm der erhaltenen Dispersion werden mit Hilfe einer medizinischen Spritze in 1 l einer 0,1% igen wäßrigen Lösung eines Tensids aus zwei Gewichtsteilen des Natriumsalzes einer Alkylbenzolsulfonsäure und einem Gewichtsteil eines ethoxylierten Nonylphenols, eingebracht, nachdem über dieser Lösung durch Einleiten eines Luftstroms über eine Fritte ein Schaumvolumen von ca. 1 l erzeugt worden ist. Der Schaum sinkt innerhalb weniger Sekunken in sich zusammen. Erst nach einer Dauer von 70 Minuten fortgesetzten Einleitens von Luft wird wieder ein Schaumvolumen von 1 l erricht.

### Beispiel 2

Ermittlung der Abhängigkeit der entschäumenden Wirkung von Polyisobutylvinylethern vom Molekulargewicht

Gemäß Beispiel 1 werden durch Variation der Initiatorkonzentration Polyisobutylvinylether verschiedenen Molekulargewichtes hergestellt und auf ihre Eigenschaften als Entschäumer untersucht. Die nachfolgende Tabelle 1 zeigt die beim Einsatz verschiedener Mengen an Bortrifluorid-Etherat pro Mol Isobutylvinylether erhaltenen Molekulargewicht $\overline{M}_w$ und $\overline{M}_n$, den erzielten Umsatz sowie die bis zur Erzielung eines Schaumvolumens von 1 l notwendige Zeit des Einleitens von Luft bei Einsatz von 50 ppm der gemäß 1 B) hergestellten Dispersion.

### Tabelle 1

| Versuchs- Nr. | Initiator [ g 100/g Monomer ] | $\overline{M}_w$ | $\overline{M}_n$ | Umsatz n [ % ] | t [ min ] |
|---|---|---|---|---|---|
| 1 | 0,565 | 650 | 590 | 99 | 30 |
| 2 | 0,339 | 760 | 670 | 99 | 39 |
| 3 | 0,226 | 850 | 740 | 99 | 53 |
| 4 | 0,113 | 1180 | 950 | 98 | 70 |
| 5 | 0,057 | 1850 | 1450 | 97 | 59 |
| 6 | 0,011 | 3500 | 2690 | 96 | 3 |

Es wird deutlich, daß im Molekulargewichtsbereich 800—1800 ein Maximum für die entschäumende Wirkung von Polyisobutylvinylethern liegt. Dieses Maximum ist jedoch auch von der Art des zu entschäumenden wäßrigen Systems abhängig.

### Beispiel 3

Herstellung und anwendungstechnische Prüfung eines Poly-2-Ethylhexylvinylethers

Gemäß Beispiel 1 wird unter Verwendung von 0,29 g (= 0,072 g/100 g Monomer) Bortrifluorid-Etherat bei der Polymerisation von 400 g (= ca. 2,6 Mol) 2-Ethylhexylvinylether ein Polymerisat mit einem Molekulargewicht $\overline{M}_w$ = 1280 und $\overline{M}_n$ = 1020 als klare, leicht gelbliche Flüssigkeit mit einer Viskosität von 730 mPas erhalten. Eine gemäß 1 B) hergestellte Dispersion ergibt in einer Konzentration von 50 ppm eine Zeit bis zur erneuten Entstehung von 1 l Schaum von 45 Minuten.

### Beispiel 4

Herstellung und anwendungstechniche Prüfung eines Isobutylvinylether-2-Ethylhexylvinylether-Copolymerisates

Gemäß Beispiel 1 wird unter Verwendung von 0,37 g (= 0,09 g/100 g Monomer) Bortrifluorid-Etherat bei der Copolymerisation von je 200 g (ca. 2 Mol) Isobutylvinylether und (ca. 1,3 Mol) 2-Ethylhexylvinylether im Copolymerisat mit einem Molekulargewicht $\overline{M}_w$ = 1050 und $\overline{M}_n$ = 890 als klare, leicht gelbliche Flüssigkeit mit einer Viskosität von 680 mPas erhalten. Eine gemäß 1 B) hergestellte Dispersion ergibt in einer Konzentration von 50 ppm eine Zeit bis zur erneuten Entstehung von 1 l Schaum von 40 Minuten.

### Beispiel 5

Herstellung und anwendungstechnische Prüfung verschiedener Alkylvinylether-Copolymerisate

Gemäß Beispiel 1 werden unter Verwendung von jeweils 0,45 g Bortrifluorid-Etherat Gemische, bestehend aus zwei, insgesamt 4 Mol, Alkylvinylethern mit unterschiedlicher Alkylgruppe zur Polymerisation gebracht. Die Art der Alkylgruppe bei beiden zum Einsatz gebrachten Alkylvinylethern, das gewählt Gewichtsverhältnis, die Molekulargewichtsmittel $\overline{M}_w$ und $\overline{M}_n$ sowie die im Entschäumungstest bis zur erneuten Entstehung von 1 l Shaum erforderliche Zeit sind in der Tabelle 2 dargestellt.

4

Tabelle 2

| Alkylvinyl-ether 1 | Alkylvinyl-ether 2 | Gewichts-verhältnis $[\%/\%]$ | $\bar{M}_w$ | $\bar{M}_n$ | $t$ $[min]$ |
|---|---|---|---|---|---|
| Isobutyl- | Ethyl- | 80/20 | 1250 | 1040 | 12 |
| " | " | 50/50 | 1280 | 1070 | 2 |
| " | n-Butyl- | 50/50 | 1170 | 1000 | 65 |
| " | 2-Ethylhexyl- | 80/20 | 1120 | 950 | 57 |
| " | " | 50/50 | 1090 | 890 | 40 |
| " | Octadecyl- | 80/20 | 1100 | 920 | 39 |
| " | " | 50/50 | 1080 | 930 | 15 |
| Ethyl- | " | 80/20 | 1250 | 1010 | 32 |
| " | " | 50/50 | 1190 | 970 | 18 |

Es wird deutlich, daß Polymerisate aus Alkylvinylethern mit etwa 4 C-Atomen in der Alkylgruppe die größte entschäumende Wirkung besitzen.

Beispiel 6

Herstellung und anwendungstechnische Prüfung einer Emulsion aus Polyisobutylvinylether

In einem mit einem Turbinenrühren versehenen Gefäß werden 200 Gew.-Teile des nach Beispiel 1 A) erhaltenen Polyisobutylvinylethers mit 800 Gew.-Teilen einer Lösung, bestehend aus 20 Gew.-Teilen eines ethoxylierten Stearylalkohols (HLB-Wert 5) und 30 Gew.-Teilen eines ethoxylierten Triglycerids (HLB-Wert 17), 5 Gew.-Teilen eines Polysaccharids, 2 Gew.-Teilen eines Konservierungsmittels sowie 743 Gew.-Teilen Wasser voremulgiert. Die erhaltene Öl-in-Wasser-Emulsion wird durch dreimaliges Homogenisieren in einem Spalthomogenisator nachbehandelt.

Je 250 ppm der erhaltenen Emulsion, entsprechend einem Wirkstoffeinsatz von 50 ppm, werden mit Hilfe einer medizinischen Spritze in je 1 l einer wäßrigen Lösung von A eines Tensids aus 2 Gew.-Teilen des Natriumsalzes einer Alkylbenzolsulfonsäure und 1 Gew.-Teil eines Nonylphenolglykolethers, von B eines Tensids aus 1 Gew.-Teil Dodecylbenzolsulfonat und 1 Gew.-Teil Fettalkoholpolyglykolether sowie C eines Tensids aus Natriumlaurylsulfat eingebracht, nachdem über diesen Lösungen durch Einleiten eines Luftstromes (6 l/Minute) über eine Fritte ein Schaumvolumen von ca. 1 l erzeugt worden ist. Der Schaum sinkt in jedem Fall innerhalb weniger Sekunden in sich zusammen. Im Fall A liegt eine 0,1% ige Lösung vor, nach 57 Minuten fortgesetzten Einleitens von Luft wird hier wieder ein Schaumvolumen von 1 l erreicht; im Fall B liegt eine 1% ige Lösung vor, das Schaumvolumen von 1 l wird hier nach 28 Minuten erreicht; im Fall C liegt eine 0,05% ige Lösung vor, das Schaumvolumen von 1 l wird hier nach 61 Minuten erreicht.

**Patentanspruch**

Verwendung von Polymerisaten von Alkylvinylethern, deren Alkylrest 2 bis 18 Kohlenstoffatome aufweist, mit einem Gewichtsmittel des Molekulargewichtes $\bar{M}_w$ von 400 bis 10 000 in Mengen von 1 bis 200 ppm zur Verhinderung oder Beseitigung von Schaum auf wäßrigen Medien.

**Revendication**

Utilisation de polymères d'éthers d'alkylvinyle dont le groupe alkyle présente de 2 à 18 atomes de carbone, ayant une moyenne de poids moléculaire $\bar{M}_w$ allant de 400 à 10.000, dans des quantités allant de 1 à 200 ppm, pour empêcher la formation de mousse ou pour éliminer la mousse dans des milieux aqueux.

**Claim**

The use of polymers of alkyl vinyl ethers, whose alkyl radical has from 2 to 18 carbon atoms, and which have a weight-average molecular weight $\bar{M}_w$ of from 400 to 10,000 in amounts of 1 to 200 ppm for preventing or eliminating foam on aqueous media.